# FASCICULE DE BREVET EUROPEEN

(11) **EP 0 581 656 B1**
(45) Date de publication et mention de la délivrance du brevet: **12.03.1997**
(21) Numéro de dépôt: 93401918.3
(22) Date de dépôt: 23.07.1993
(51) Int. Cl.: G01S 13/90

(54) **Procédé et dispositif de traitement des signaux acquis par un système de cartographie**
Verfahren und Vorrichtung zum Bearbeiten von Signalen die von einem Abbildungssystem erfasst werden
Method and apparatus for processing signals acquired by a mapping system

(30) Priorité: 31.07.1992 FR 9209533
(43) Date de publication de la demande: 02.02.1994
(73) Titulaire: THOMSON-CSF, 75008 Paris (FR)
(72) Inventeur: Normant, Eric, F-92402 Courbevoie Cédex (FR); Hermer, Jean-Michel, F-92402 Courbevoie Cédex (FR)
(74) Mandataire: Benoit, Monique

(56) Documents cités:
- IEEE TRANSACTIONS ON GEOSCIENCE AND REMOTE SENSING vol. 30, no. 3 , Mai 1992 , NEW YORK US pages 550 - 558 XP290466 C. PRATI ET AL. 'Focusing SAR Data with Time-Varying Doppler Centroid'
- ELI BROOKNER 'RADAR TECHNOLOGY' 1977 , ARTECH HOUSE , US, DEDHAM * chapitre 18 * * page 252, colonne de droite - page 253, colonne de gauche *
- MELECON 87, MEDITERRANEAN ELECTROTECHNICAL CONFERENCE 1987 , ITALY pages 705 - 709 S BARBAROSSA ET AL. 'The Spotlight mode to solve high resolution problems in Imaging Radars'

## Description

La présente invention concerne un procédé et un dispositif de traitement des signaux acquis par un système de cartographie.

Bien que nous ne décrirons par la suite que l'application à un radar de cartographie, il est d'ores et déjà bien entendu que le terme "système" s'applique également au sonar de cartographie. Les radars de cartographie sont soit aéroportés, soit embarqués sur satellites, et leur mission est d'acquérir des signaux provenant de la zone que l'on cherche à étudier en envoyant sur cette zone des impulsions à une fréquence de récurrence F_{R} donnée. Ces radars sont généralement à visée latérale. On utilise alors la fréquence Doppler des signaux acquis pour déterminer la distance et la position des points de la zone.

On sait à l'heure actuelle que l'utilisation d'un radar à compression d'impulsions permet d'obtenir une bonne résolution en distance. On connaît des radars SAR à visée latérale, SAR étant les initiales anglo-saxonnes de Synthetic Aperture Radar (Radar à ouverture synthétique), dont la particularité en mode classique de prise de vue, est d'avoir toujours le même faisceau d'éclairement en azimut au fur et à mesure que le satellite ou l'avion avance sur sa trajectoire.

L'inconvénient de ces radars est que la bande Doppler Bd occupée par les signaux échos est égale à la fréquence de récurrence F_{R} du radar. Or, la résolution en azimut est proportionnelle à la quantité vτ, v étant la vitesse de déplacement du radar et τ, la résolution temporelle, τ étant elle-même inversement proportionnelle à la bande Doppler B_{d} occupée par les signaux échos.

La nécessité d'augmenter cette bande Doppler B_{d} en vue d'avoir une meilleure résolution en azimut a donné naissance au radar SAR utilisant un mode télescope, plus connu sous le nom emprunté à l'anglais de mode spotlight, dont on peut trouver une description détaillée dans le document "SPOT MODE SAR FOCUSING WITH THE W-K TECHNIQUE" de C. Prati, A. Monti Guarnieri et F. Rocca (IGARSS 91, pages 631, 634). Le principe général du mode spotlight est d'éclairer toujours la même zone au fur et à mesure que le radar avance, et par conséquent, d'incliner le faisceau du radar au fur et à mesure de son déplacement de telle sorte que cette zone soit toujours éclairée. L'acquisition des signaux échos ne commence que lorsque ce faisceau intercepte la zone complète.

Avec ce mode, la bande Doppler B_{d} qui correspond à l'intervalle de décalage en fréquence Doppler pendant le temps d'éclairement de la zone, est beaucoup plus grande que la bande Doppler [- F_{R}/2 ; + F_{R}/2] du radar, et, consécutivement, la résolution en azimut est meilleure. Cependant, l'inconvénient majeur du mode spotlight est que la longueur de la zone imagée se réduit à la largeur à 3 dB du lobe de l'antenne radar.

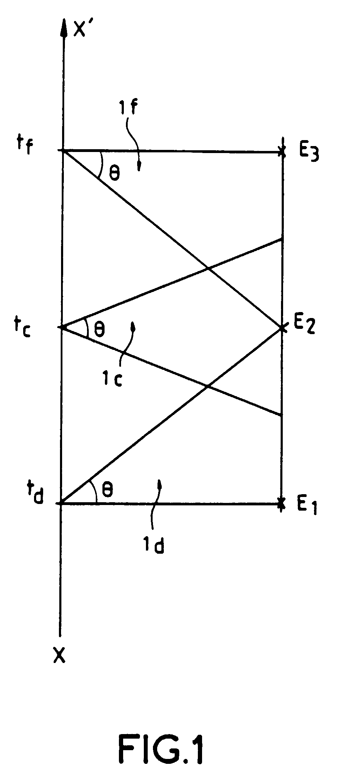

Pour voir une zone plus étendue qu'en mode spotlight, un mode spotlight amélioré, que nous appellerons mode spotlight étendu pour le distinguer du mode spotlight classique vu précédemment, est actuellement à l'étude. Le principe du mode spotlight étendu est illustré schématiquement sur la figure 1 sur laquelle l'axe XX' représente la trajectoire du radar à vitesse sensiblement constante, et la droite passant par les trois points E₁, E₂, E₃, une portion azimutale de la zone explorée, parallèle à l'axe XX'. L'acquisition des signaux échos selon le mode spotlight étendu s'effectue dès que le faisceau du radar intercepte un point de la zone. Comme illustré sur la figure 1, le faisceau 1d à l'instant td vient de terminer l'acquisition des échos provenant du point E₁, et commence juste l'acquisition des échos provenant du point E₂. A l'instant t_{c}, le faisceau 1c du radar éclaire symétriquement de part et d'autre du point E₂. Cet instant t_{c} correspond à la distance minimale du radar au point E₂ et à une fréquence Doppler nulle du signal écho provenant de E₂. Enfin, à l'instant t_{f}, le faisceau 1f du radar correspond à la fin de l'acquisition des échos provenant de E₂, et au début de l'acquisition de ceux provenant de E₃.

Dans ce mode spotlight étendu, la longueur de la zone imagée dépend de la capacité de dépointage de l'antenne en azimut. Il est également nécessaire que la rotation du faisceau en azimut assure la couverture désirée en respectant le temps d'éclairement imposé par la résolution azimutale. Tout comme dans le cas du mode spotlight classique, la bande Doppler B_{d} est plus grande que la bande Doppler [- F_{R}/2 ; + F_{R}/2] du radar.

L'avantage est, comme nous l'avons déjà dit, une amélioration de la résolution en azimut, mais il existe cependant un inconvénient consistant en un phénomène de repliements des fréquences Doppler dans le plan temps-fréquence Doppler, ces repliements étant sources d'ambiguïtés. Par conséquent, il est impossible d'appliquer un traitement SAR standard aux signaux échos ainsi acquis. On sait résoudre actuellement ce problème pour le mode spotlight classique. Une solution est par exemple exposée dans le document "A TOMOGRAPHIC FORMULATION OF SPOTLIGHT MODE SYNTHETIC APERTURE RADAR" de Munson D.C., J.D. O'Brien et W.K. Jenkins (IEEE, Volume 71, pages 917-925 - Août 1983).

Par contre, aucune solution n'a été proposée pour le mode spotlight étendu, et c'est ce que la présente invention se propose de faire.

Plus précisément, un premier objet de l'invention concerne un procédé de traitement de signaux échos acquis par un système de cartographie de fréquence de récurrence F_{R}, le système fonctionnant en mode spotlight étendu à vision latérale, pour lequel chaque signal écho acquis suit théoriquement dans le plan temps-fréquence Doppler, une loi continue quasi-linéaire et comprise entre deux courbes sensiblement linéaires possédant une même inclinaison initiale dans ledit plan et définissant une bande oblique, ladite loi étant en pratique discontinue en raison de repliements des fréquences Doppler dans la bande utile du système [- F_{R}/2 + F_{R}/2], le procédé étant caractérisé en ce qu'il consiste à effectuer successivement les étapes suivantes :
- faire un sur-échantillonnage des signaux échos acquis, à une fréquence F proportionnelle à la fréquence de récurrence F_{R}, avec un coefficient de proportionnalité choisi de façon à ce que ladite loi redevienne continue dans la bande oblique ;
- rendre la bande oblique horizontale dans ledit plan de façon à la superposer à la bande utile [- F_{R}/2 ; + F_{R}/2] du radar;
- faire un filtrage passe-bande de bande [-F_{R}/2 ; F_{R}/2 ]
- rendre à la bande oblique son inclinaison initiale.

Un second objet de l'invention concerne un dispositif de traitement pour la mise en oeuvre du procédé selon les revendications 1 à 5, caractérisé en ce qu'il comporte :
- un dispositif de sur-échantillonnage à la fréquence F, recevant en entrée les signaux échos acquis par le radar ;
- un premier module de génération d'une rampe de fréquence de pente opposée à l'inclinaison initiale de la bande oblique ;
- un premier module de multiplication effectuant la multiplication des échantillons issus du dispositif de sur-échantillonnage par la rampe de fréquence générée par le premier module de génération d'une rampe ;
- un filtre passe-bande de bande [-F_{R}/2 ; + F_{R}/2] filtrant les échantillons issus du premier module de multiplication ;
- un second module de génération d'une rampe de fréquence de pente égale à l'inclinaison initiale de la bande oblique ;
- un second module de multiplication effectuant la multiplication des échantillons issus du filtre passe-bande par la rampe de fréquence générée par le second module de génération d'une rampe.

L'invention, ainsi que ses avantages, seront mieux compris au vu de la description suivante, faite en référence aux figures annexées :
- La figure 1 illustre le principe de l'acquisition des signaux échos en mode spotlight étendu ;
- La figure 2 montre, dans le plan temps-fréquence Doppler, les lois suivies théoriquement par les signaux échos acquis provenant des points E₁, E₂, E₃ de la figure 1, et ce que voit le radar en pratique ;
- La figure 3 donne, dans le plan temps-fréquence Doppler, l'allure des signaux à l'issue de la première étape du procédé de traitement selon l'invention ;
- La figure 4 montre, dans ce même plan, l'allure des signaux après la seconde étape du procédé de traitement selon l'invention ;
- La figure 5 illustre, dans le même plan, l'allure des signaux après la dernière étape du procédé selon l'invention ;
- La figure 6 illustre les courbes de migrations, dans le plan distance-fréquence Doppler, relatives aux trois signaux ;
- La figure 7 est un exemple de réalisation d'un dispositif pour la mise en oeuvre du procédé selon l'invention.

La figure 1, illustrant le principe de l'acquisition en mode spotlight étendu, a déjà été décrite dans l'introduction. On supposera par la suite que le radar a commencé à émettre à un temps t' antérieur à t_{d} et correspondant au début de l'acquisition pour le point E₁, et continue d'émettre jusqu'à un temps t'' correspondant à la fin de l'acquisition pour le point E₃.

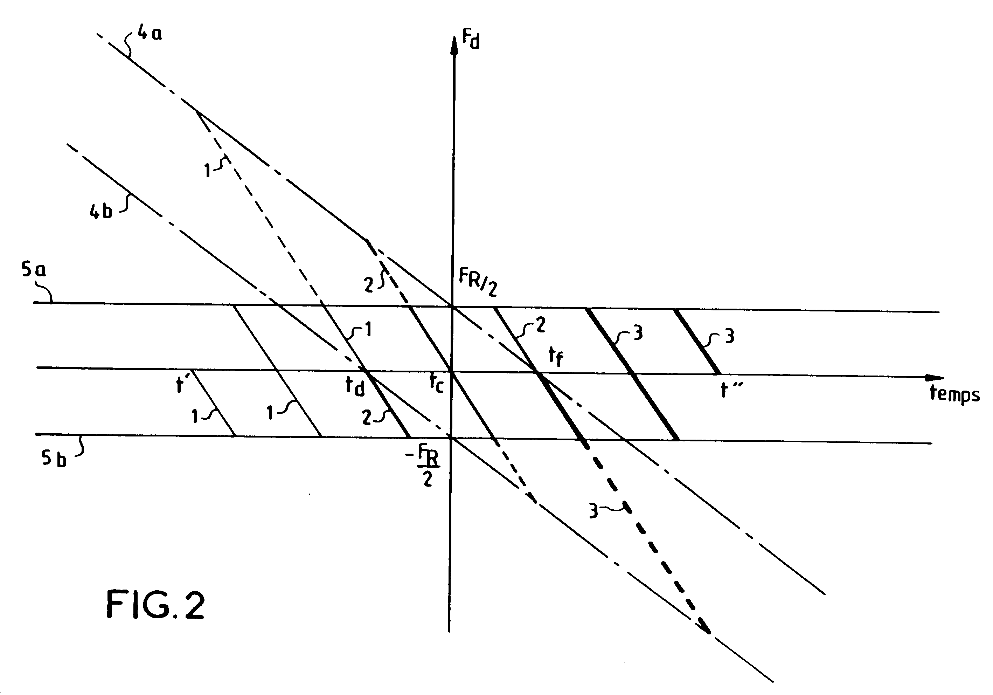

Avec les hypothèses précédentes, on a représenté simultanément sur la figure 2 la loi dans le plan temps-fréquence Doppler suivie théoriquement par les signaux échos acquis et le phénomène de repliement des fréquences dû en pratique à la fréquence de récurrence F_{R} du radar.

Compte tenu de la vitesse sensiblement constante de déplacement du radar, du mode d'acquisition qui se déclenche dès qu'un point Eᵢ est intercepté par le faisceau du radar, et de la vitesse de rotation sensiblement constante du faisceau au fur et à mesure que le radar se déplace, il est facile de démontrer que les signaux acquis devraient avoir chacun une loi en fréquence Doppler quasi-linéaire en fonction du temps et de même pente. On a représenté ainsi les trois droites continues théoriques référencées 1, 2 et 3 relatives respectivement aux signaux échos en provenance des points E₁, E₂, et E₃, comprises respectivement dans les intervalles de temps [t', t_{d}], [t_{d}, t_{f}] et [t_{f}, t"].

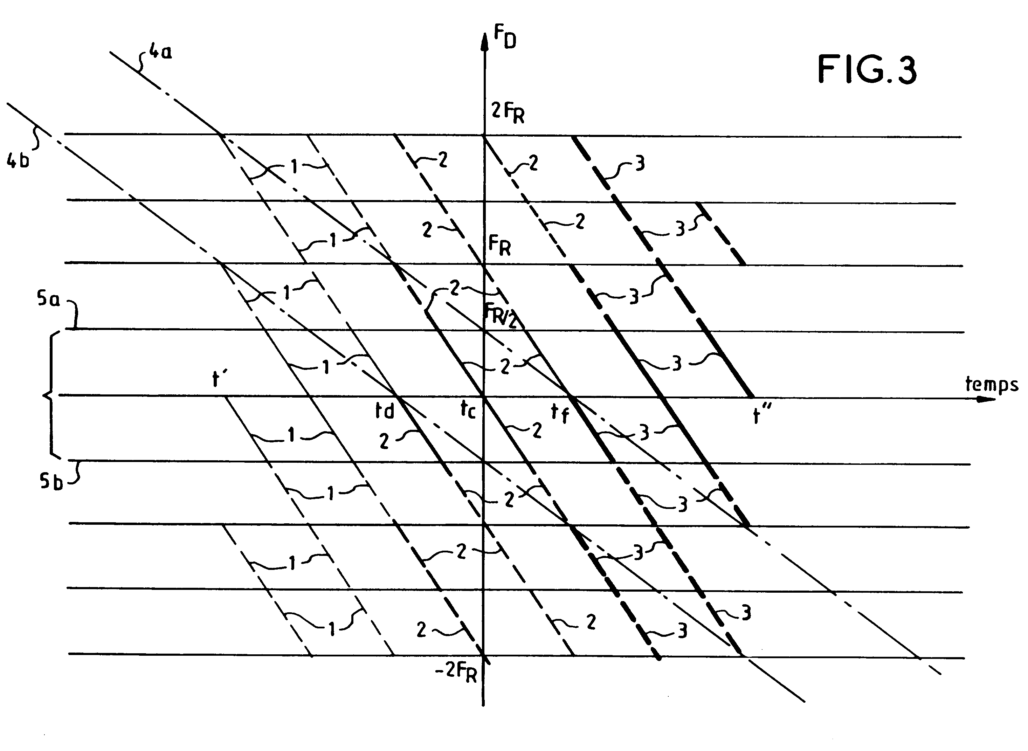

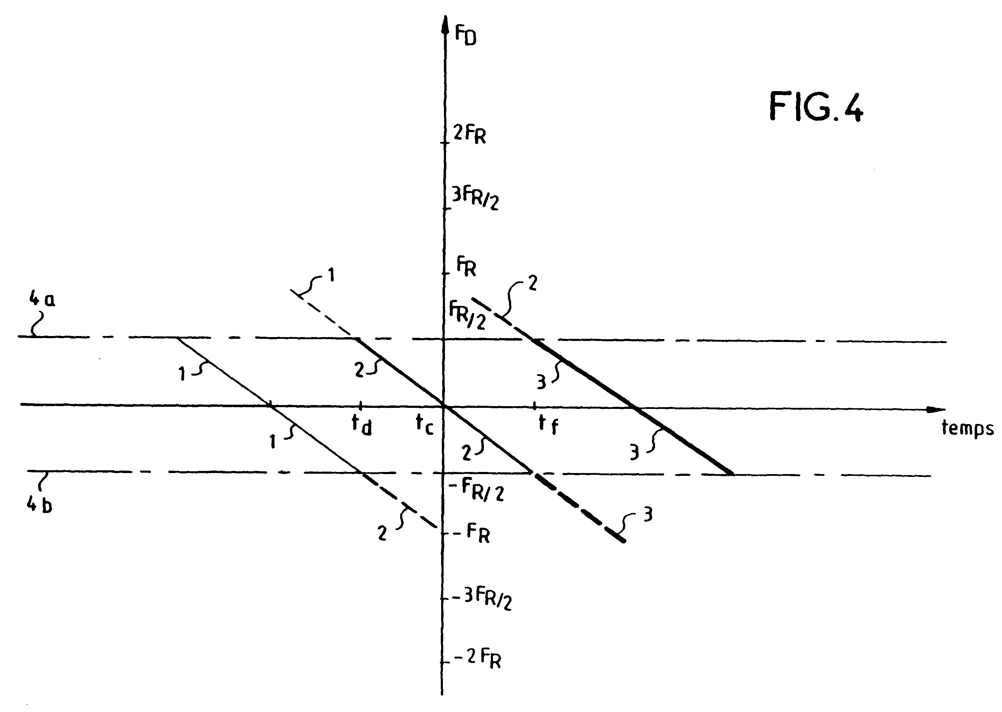

Pour faciliter la compréhension, on a pris comme conventions :
- de représenter en trait continu tout ce qui se situe dans la bande utile [- F_{R}/2; + F_{R}/2] du radar, et en traits pointillés, tout ce qui est extérieur à cette bande utile ;
- de distinguer les portions des trois lois relatives aux trois points E₁, E₂, E₃, d'une part, par des traits (continus ou pointillés) d'épaisseurs différentes, et d'autre part, par des références respectives 1, 2 et 3. Ces conventions valent également pour les figures 3 et 4.

La propriété caractéristique du mode spotlight étendu est que les lois précédentes sont comprises entre deux courbes 4a, 4b, quasi-linéaires, définissant une bande oblique de largeur sensiblement égale à la fréquence de récurrence F_{R} du radar. L'inclinaison de cette bande oblique est causée par le fait que les points E₁, E₂ et E₃ apparaissent sous un angle de dépointage différent à mesure que le radar avance. Cette inclinaison est aussi fonction de la vitesse de rotation du faisceau du radar.

Cependant, ces trois droites comprises dans la bande oblique ne sont pas obtenues en pratique si l'on n'effectue aucun traitement des signaux acquis. En effet, la fréquence de récurrence F_{R} du radar réalise un échantillonnage naturel des signaux, et il en résulte un repliement des portions de droites en traits pointillés à l'intérieur de la bande utile du radar. Ainsi, comme le montre la figure 2, on obtient dans la bande de fréquence [- F_{R}/2 ; + F_{R}/2] trois portions de droites discontinues pour chaque droite 1, 2, 3, les portions correspondant aux repliements constituant des cibles fantômes.

Le procédé de traitement selon l'invention propose une série d'étapes qui permet de reconstituer les trois droites théoriques comme nous allons le décrire ci-aprés :

La première étape du procédé selon l'invention consiste à faire un sur-échantillonnage des signaux acquis à une fréquence F proportionnelle à la fréquence F_{R} de récurrence. Le coefficient de proportionnalité est choisi de façon à reconstituer les droites 1, 2 et 3 dans la bande oblique. Une fréquence F égale à 4F_{R} suffit pour le cas de figure traité.

Dans le cas général, si la fréquence F est trop importante, on pourra partitionner le traitement en blocs le long de l'axe azimutal, effectuer le traitement pour chaque bloc, puis concaténer les résultats.

La figure 3 montre le résultat obtenu dans le plan temps-fréquence à l'issue de cette étape de sur-échantillonnage. On peut constater sur cette figure 3 que la bande oblique (4a, 4b), dans l'intervalle de temps allant de t' à t'', ne contient que trois droites continues 1, 2, 3 qui sont les trois lois reconstituées. Dans la pratique, on peut procéder au sur-échantillonnage de différentes manières :

Si le coefficient de proportionnalité est un nombre entier N, on peut intercaler, entre chaque signal écho acquis (N-1) zéros.

Une autre méthode consiste à faire la transformée de Fourier des signaux échos acquis, de rendre périodique de période F_{R} cette transformée sur un intervalle de fréquence [-F/2 ; + F/2], puis de revenir en temporel en prenant la transformée de Fourier inverse. Le problème est qu'il reste encore beaucoup d'échos parasites à l'extérieur de cette bande oblique.

La seconde étape du procédé selon l'invention consiste à rendre la bande oblique horizontale de façon à la superposer à la bande utile [- F_{R}/2; + F_{R}/2] du radar. Pour ce faire, on peut multiplier les échantillons de signaux issus de l'étape de sur-échantillonnage par un signal dont la loi en fréquence en fonction du temps est une droite passant par l'origine du plan temps-fréquence Doppler, c'est-à-dire le point de coordonnées (t_{c}, o), et dont la pente est opposée à celle de la bande utile. Le résultat de cette deuxième étape est illustré sur la figure 4 : tous les signaux utiles 1, 2, 3 en traits continus se trouvent à l'intérieur de la bande [- F_{R}/2 ; + F_{R}/2], entre les deux droites 4a, 4b devenues horizontales, et, à l'intérieur de cette bande, les signaux suivent bien une loi quasi-linéaire et continue.

L'étape suivante selon l'invention consiste en un filtrage passe-bande de bande égale à [-F_{R}/2 ; +F_{R}/2] de manière à éliminer tous les signaux parasites 1, 2, 3 dont seulement quelques uns ont été représentés en pointillés sur la figure 4.

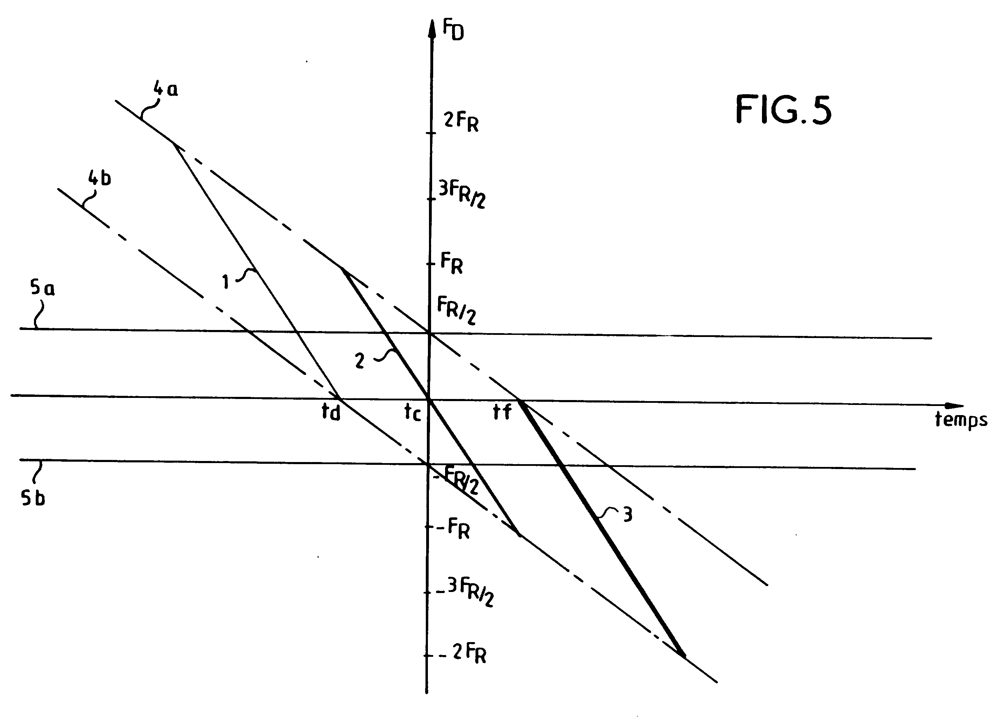

Finalement, la dernière étape du procédé selon l'invention consiste à rendre à la bande comprise entre les droites 4a, 4b, son inclinaison initiale. Ceci peut se faire en multipliant les échantillons après filtrage par un signal dont la loi en fréquence en fonction du temps est une droite passant par l'origine du plan temps-fréquence Doppler, et dont la pente est égale à l'inclinaison initiale de la bande oblique. Le résultat de cette étape est illustré sur la figure 5 : on peut voir que les lois théoriques 1, 2, 3 ont été reconstituées dans la pratique et qu'il n'y a plus aucune ambiguïté possible. Le spectre des signaux de départ a été déplié et les cibles fantômes éliminées.

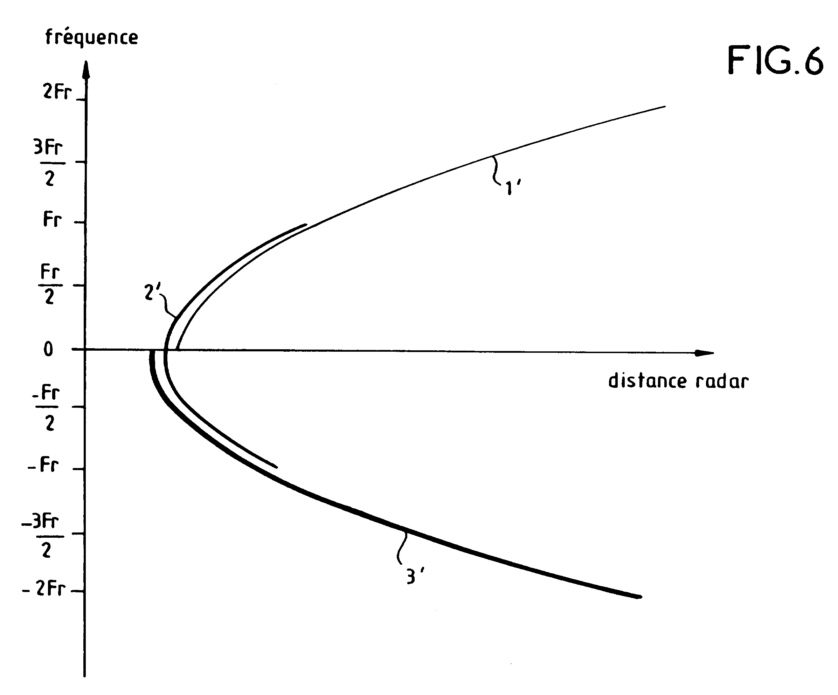

La figure 6 donne les courbes 1', 2', 3' de migration des points respectifs E₁, E₂, E₃ dans le plan distance radar-fréquence. Ces trois courbes 1', 2', 3' sont quasiment superposées et possèdent l'allure générale de ce que l'on obtiendrait avec un radar SAR à visée latérale classique. Les échantillons issus de traitement selon le procédé de l'invention peuvent donc être traités par tout processeur SAR classique.

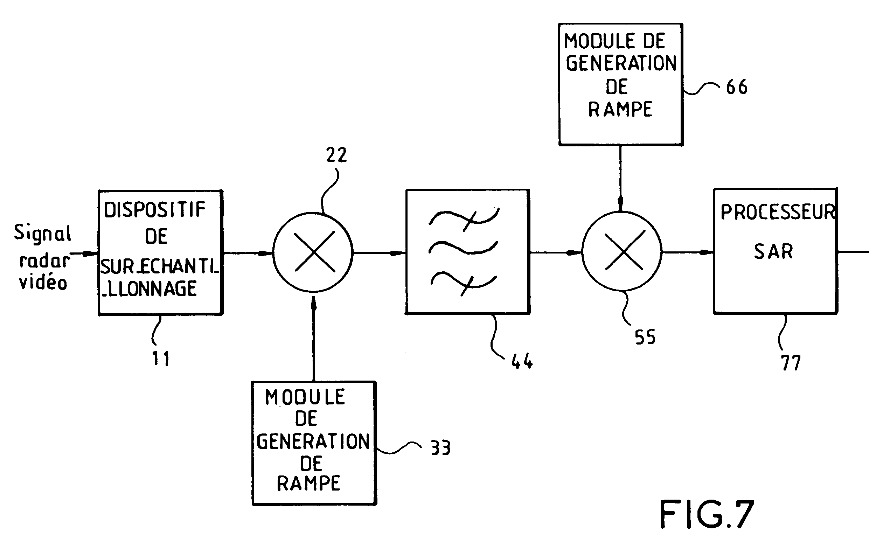

La figure 7 donne un exemple non limitatif d'un dispositif pour la mise en oeuvre du procédé selon l'invention :

Le signal radar vidéo est tout d'abord traité par un dispositif de sur-échantillonnage 11 à la fréquence F. Les échantillons issus du dispositif de sur-échantillonnage 11 sont ensuite multipliés, au moyen d'un premier module de multiplication 22, par des échantillons issus d'un premier module de génération de rampe 33, lequel génère un signal modulé quasi-linéairement en fréquence avec une pente opposée à l'inclinaison initiale de la bande oblique. Les échantillons résultant de cette multiplication sont ensuite filtrés par un filtre passe-bande 44 de bande [-F_{R}/2 ; + F_{R}/2] puis sont multipliés, au moyen d'un second module de multiplication 55 par des échantillons issus d'un second module de génération de rampe 66, lequel génère un signal modulé quasi-linéairement en fréquence avec une pente égale à l'inclinaison initiale de la bande oblique. Ceci constitue la fin du traitement selon l'invention, et les échantillons issus du second module de multiplication 55 peuvent être traités par un processeur SAR classique 77.

Un grand avantage de la présente invention réside ainsi dans la capacité à transformer des données fournissant une image radar à résolution azimutale plus élevée qu'en SAR classique, sur une zone plus étendue qu'en mode spotlight classique, en des échantillons susceptibles d'être traités par un processeur SAR classique conçu pour la visée latérale.

## Revendications

1. Procédé de traitement de signaux échos acquis par un système de cartographie de fréquence de récurrence F_{R}, le système fonctionnant en mode spotlight étendu à vision latérale, pour lequel chaque signal écho acquis suit théoriquement dans le plan temps-fréquence Doppler, une loi continue quasi-linéaire et comprise entre deux courbes sensiblement linéaires possédant une même inclinaison initiale dans ledit plan et définissant une bande oblique, ladite loi étant en pratique discontinue en raison de repliements des fréquences Doppler dans la bande utile du système [- F_{R}/2; + F_{R}/2], le procédé étant caractérisé en ce qu'il consiste à effectuer successivement les étapes suivantes :
- faire un sur-échantillonnage des signaux échos acquis, à une fréquence F proportionnelle à la fréquence de récurrence F_{R}, avec un coefficient de proportionnalité choisi de façon à ce que ladite loi redevienne continue dans la bande oblique ;
- rendre la bande oblique horizontale dans ledit plan de façon à la superposer à la bande utile [- F_{R/}2 ; + F_{R}/2] du radar;
- faire un filtrage passe-bande de bande [- F_{R}/2 ; + F_{R}/2];
- rendre à la bande oblique son inclinaison initiale.

2. Procédé de traitement selon la revendication 1, caractérisé en ce que le coefficient de proportionnalité est un nombre entier N et en ce que l'étape de sur-échantillonnage consiste à intercaler entre des signaux échos acquis adjacents N-1 zéros.

3. Procédé de traitement selon la revendication 1, caractérisé en ce que l'étape de sur-échantillonnage consiste à faire la transformée de Fourier des signaux échos acquis, de la rendre périodique de période F_{R} sur un intervalle de fréquence [-F/2 ; +F/2], puis de faire la transformée de Fourier inverse.

4. Procédé de traitement selon l'une quelconque des revendications précédentes, caractérisé en ce que, pour rendre la bande oblique horizontale, on multiplie les échantillons issus de l'étape de sur-échantillonnage par un signal dont la loi, dans le plan temps-fréquence Doppler, est une droite quasi-linéaire passant par l'origine du plan de pente opposée à l'inclinaison initiale de la bande oblique.

5. Procédé de traitement selon l'une quelconque des revendications précédentes, caractérisé en ce que, pour rendre à la bande oblique son inclinaison initiale, on multiplie les échantillons restants après ledit filtrage par un signal dont la loi, dans le plan temps-fréquence Doppler est une droite quasi-linéaire passant par l'origine et de pente égale à l'inclinaison initiale de la bande oblique.

6. Dispositif de traitement pour la mise en oeuvre du procédé selon les revendications 1 à 5, caractérisé en ce qu'il comporte :
- un dispositif de sur-échantillonnage (11) à la fréquence F, recevant en entrée les signaux échos acquis par le radar ;
- un premier module de génération d'une rampe de fréquence (33) de pente opposée à l'inclinaison initiale de la bande oblique ;
- un premier module de multiplication (22) effectuant la multiplication des échantillons issus du dispositif de sur-échantillonnage (11) par la rampe de fréquence générée par le premier module de génération d'une rampe (33) ;
- un filtre passe-bande (44) de bande [- F_{R}/2 ; + F_{R}/2] filtrant les échantillons issus du premier module de multiplication (22);
- un second module de génération d'une rampe de fréquence (66) de pente égale à l'inclinaison initiale de la bande oblique ;
- un second module de multiplication (55) effectuant la multiplication des échantillons issus du filtre passe-bande (44) par la rampe de fréquence générée par le second module de génération d'une rampe (66).

## Patentansprüche

1. Verfahren zur Bearbeitung von Echosignalen, die von einem Kartographiesystem mit einer Wiederholfrequenz F_{R} erfaßt wurden, wobei das System im erweiterten Spotlight-Modus mit seitlichem Sichtfeld arbeitet und jedes erfaßte Echosignal theoretisch in der zwischen der Zeit und der Dopplerfrequenz definierten Ebene ein kontinuierliches und praktisch lineares, sowie zwischen zwei im wesentlichen linearen Kurven enthaltenes Gesetz beachtet, wobei diese Kurven eine gleiche ursprüngliche Neigung in dieser Ebene besitzen und ein schräges Band definieren und wobei dieses Gesetz in der Praxis aufgrund von Faltungen der Dopplerfrequenzen im Nutzfrequenzband des Systems [-F_{R}/2; +F_{R}/2] diskontinuierlich ist, dadurch gekennzeichnet, daß nacheinander folgende Schritte durchgeführt werden:
- die erfaßten Echosignale werden mit einer Frequenz F proportional zur Wiederholfrequenz F_{R} mit einem Proportionalitätsfaktor übergetastet, der so gewählt ist, daß das Gesetz in dem schrägen Band wieder kontinuierlich wird,
- das schräge Band wird in der erwähnten Ebene horizontal gemacht, so daß es das Nutzfrequenzband [-F_{R}/2; +F_{R}/2] des Radargeräts überlagert,
- man filtert ein Band [-F_{R}/2; +F_{R}/2] aus,
- man gibt dem schrägen Band wieder seine ursprüngliche Neigung.

2. Bearbeitungsverfahren nach Anspruch 1, dadurch gekennzeichnet, daß der Proportionalitätsfaktor eine ganze Zahl N ist und daß die Übertastung darin besteht, zwischen die erfaßten benachbarten Echosignale N-1 Werte Null einzufügen.

3. Bearbeitungsverfahren nach Anspruch 1, dadurch gekennzeichnet, daß die Übertastung darin besteht, die Fouriertransformierte der erfaßten Echosignale zu bilden, diese Transformierte periodisch zu machen mit einer Periode F_{R} in einem Frequenzintervall [-F/2; +F/2] und dann die umgekehrte Fouriertransformierte zu bilden.

4. Bearbeitungsverfahren nach einem beliebigen der vorhergehenden Ansprüche, dadurch gekennzeichnet, daß für die Umwandlung des schrägen Bands in ein waagrechtes Band die aus der Übertastung stammenden Tastproben mit einem Signal multipliziert werden, dessen Gesetz in der zwischen Zeit und Dopplerfrequenz definierten Ebene eine praktisch gerade Linie ist, die durch den Ursprung der Ebene verläuft und eine entgegengesetzte Neigung zur ursprünglichen Neigung des schrägen Bandes besitzt.

5. Bearbeitungsverfahren nach einem beliebigen der vorhergehenden Ansprüche, dadurch gekennzeichnet, daß zur Wiederherstellung der ursprünglichen schrägen Lage des Bandes die nach der Filterung verbleibenden Tastproben mit einem Signal multipliziert werden, dessen Gesetz in der zwischen der Zeit und der Dopplerfrequenz definierten Ebene eine praktisch lineare Gerade ist, die durch den Ursprung geht und deren Neigung der ursprünglichen Neigung des schrägen Bandes entspricht.

6. Bearbeitungsvorrichtung zur Durchführung des Verfahrens nach den Ansprüchen 1 bis 5, dadurch gekennzeichnet, daß sie enthält:
- eine Übertastungsvorrichtung (11) mit der Frequenz F, die am Eingang die vom Radargerät erfaßten Echosignale empfängt,
- einen ersten Modul (33) zur Erzeugung einer Frequenzrampe mit einer Neigung entgegengesetzt zur ursprünglichen Neigung des schrägen Bandes,
- einen ersten Multipliziermodul (22), der die aus der Übertastungsvorrichtung (11) kommenden Tastproben mit der Frequenzrampe multipliziert, die aus dem ersten Modul (33) zur Erzeugung einer Rampe stammt,
- ein Bandpaßfilter (44) für das Frequenzband [-F_{R}/2; +F_{R}/2], das die aus dem ersten Multipliziermodul (22) stammenden Tastproben filtert,
- einen zweiten Modul (66) zur Erzeugung einer Frequenzrampe mit einer Neigung gleich der ursprünglichen Neigung des schrägen Bands,
- einen zweiten Multipliziermodul (55), der die aus dem Bandpaßfilter (44) kommenden Tastproben mit der Frequenzrampe multipliziert, die im zweiten Modul (66) zur Erzeugung einer Rampe gebildet wurde.

## Claims

1. Method of processing echo signals acquired by a mapping system with recurrence frequency F_{R}, the system operating in sideways-looking extended spotlight mode, for which each echo signal acquired theoretically follows, in the time/Doppler frequency plane, a quasi-linear continuous law lying between two substantially linear curves possessing the same initial inclination in the said plane and defining an oblique band, the said law being in practice discontinuous by reason of aliasings of the Doppler frequencies in the useful band of the system [-F_{R}/2; + F_{R}/2], the method being characterized in that it consists in performing the following steps in succession:
- oversampling the echo signals acquired, at a frequency F proportional to the recurrence frequency F_{R}, with a coefficient of proportionality chosen in such a way that the said law becomes continuous again in the oblique band;
- making the oblique band horizontal in the said plane so as to superimpose it on the useful band [-F_{R}/2; + F_{R}/2] of the radar;
- bandpass filtering of band [-F_{R}/2; + F_{R}/2];
- returning the oblique band to its initial inclination.

2. Processing method according to Claim 1, characterized in that the coefficient of proportionality is an integer N and in that the oversampling step consists in interposing N-1 zeros between adjacent acquired echo signals.

3. Processing method according to Claim 1, characterized in that the oversampling step consists in producing the Fourier transform of the echo signals acquired, making it periodic of period F_{R} over a frequency interval [-F/2; + F/2], and then producing the inverse Fourier transform.

4. Processing method according to any one of the preceding claims, characterized in that, in order to make the oblique band horizontal, the samples emanating from the oversampling step are multiplied by a signal whose law, in the time/Doppler frequency plane, is a quasi-linear line passing through the origin of the plane with slope opposite to the initial inclination of the oblique band.

5. Processing method according to any one of the preceding claims, characterized in that, to return the oblique band to its initial inclination, the remaining samples after the said filtering are multiplied by a signal whose law, in the time/Doppler frequency plane, is a quasi-linear line passing through the origin and of slope equal to the initial inclination of the oblique band.

6. Processing device for implementing the method according to Claims 1 to 5, characterized in that it includes:
- a device (11) for oversampling at the frequency F, receiving as input the echo signals acquired by the radar;
- a first module for generating a frequency ramp (33) of slope opposite to the initial inclination of the oblique band;
- a first multiplication module (22) performing the multiplication of the samples emanating from the oversampling device (11) by the frequency ramp generated by the first module for generating a ramp (33);
- a bandpass filter (44) with band [-F_{R}/2; + F_{R}/2] filtering the samples emanating from the first multiplication module (22);
- a second module for generating a frequency ramp (66) of slope equal to the initial inclination of the oblique band;
- a second multiplication module (55) performing the multiplication of the samples emanating from the bandpass filter (44) by the frequency ramp generated by the second module for generating a ramp (66).
